# NEUE EUROPÄISCHE PATENTSCHRIFT

(11) **EP 3 092 358 B2**
(45) Veröffentlichungstag und Bekanntmachung des Hinweises auf die Entscheidung über den Einspruch: **28.02.2024**
(45) Hinweis auf die Patenterteilung: 24.02.2021
(21) Anmeldenummer: 14806320.9
(22) Anmeldetag: 04.12.2014
(51) Int. Cl.: E04H 12/12, F03D 13/20, E04H 12/16, E04H 12/18, E02D 27/42

(54) **WINDENERGIEANLAGE MIT TURM UND FUNDAMENT AUS MEHREREN SEGMENTEN**
WIND TURBINE COMPRISING A SEGMENTED TOWER AND FOUNDATION
ÉOLIENNE POURVUE D'UN MÂT ET D'UNE EMBASE COMPOSÉE DE PLUSIEURS SEGMENTS

(30) Priorität: 06.12.2013 DE 102013225128
(43) Veröffentlichungstag der Anmeldung: 16.11.2016
(73) Patentinhaber: Wobben Properties GmbH, 26607 Aurich (DE)
(72) Erfinder: KRAFT, Martin, 26605 Aurich (DE)
(74) Vertreter: Eisenführ Speiser
(86) Internationale Anmeldenummer: PCT/EP2014/076601
(87) Internationale Veröffentlichungsnummer: WO 2015/082631

(56) Entgegenhaltungen:
- EP-A1- 2 518 240
- EP-A2- 2 108 836
- WO-A1-2011/091799
- WO-A1-2011/091799
- WO-A1-2013/127643
- WO-A1-2015/158352
- CN-A- 103 821 677
- CN-U- 203 924 864
- DE-A1- 10 226 996
- DE-A1-102011 085 947
- DE-A1-102011 085 947
- DE-B3-102008 010 660
- Rose Chris: "Challenging steel, concrete is now being used in wind turbine construction", EWEA EWEA, 12 September 2012 (2012-09-12), pages 1-3, Retrieved from the Internet: URL:http://www.ewea.org/blog/2012/09/chall enging-steel-concrete-is-starting-to-be-us ed-in-wind-turbine-construction/ [retrieved on 2021-12-15]

## Beschreibung

Die vorliegende Erfindung betrifft eine Windenergieanlage.

Der Turm einer Windenergieanlage wird typischerweise auf einem Fundament platziert. In der prioritätsbegründenden deutschen Patentanmeldung hat das Deutsche Patent- und Markenamt die folgenden Dokumente recherchiert: EP 2 518 240 A1; DE 10 2008 010 660 B3; DE 102 26 996 A1, welches den Oberbegriff von Anspruch 1 offenbart ; JP 2010-236224 A; DE 603 17 372 T2; DE 20 2011 001 695 U1; US 2010/0024311 A1; DE 10 2011 085 947 A1 und DE 102 30 273 B3.

Es ist eine Aufgabe der vorliegenden Erfindung, eine Windenergieanlage und einen Turm einer Windenergieanlage vorzusehen, welche über einen verbesserten Anschluss zwischen dem Turm und dem Fundament der Windenergieanlage verfügen.

Diese Aufgabe wird durch eine Windenergieanlage nach Anspruch 1 gelöst.

Somit wird eine Windenergieanlage mit einem Fundament und einem auf dem Fundament platzierten Turm mit einer Mehrzahl von Turmsegmenten vorgesehen. Das Fundament weist einen Turmsockel auf, welcher zumindest teilweise in dem Fundament vergossen ist. Der Turmsockel weist mindestens zwei Segmente auf und ein unteres Turmsegment des Turms ist zusammen mit den Segmenten des Turmsockels über Spannelemente verspannt.

Gemäß einem Aspekt der vorliegenden Erfindung weist ein oberes Segment des Turmsockels ein konisches Segment mit einer Mehrzahl von Durchgangbohrungen, Durchgangslöchern oder Hüllrohren zur Aufnahme von Spannstangen auf. Die Durchgangsöffnungen, Durchgangslöcher oder Hüllrohre erstrecken sich parallel zu einer Längsrichtung des Turmsockels.

Gemäß einem weiteren Aspekt der vorliegenden Erfindung ist der Außendurchmesser des unteren Turmsegmentes kleiner als der Außendurchmesser des unteren Endes des Turmsockels.

Gemäß der vorliegenden Erfindung weist die Windenergieanlage einen Ankerring als Teil des Turmsockels auf, der als Teil des Turmsockels in dem Fundament einbetoniert ist. An dem Ankerring werden erste Enden der Spannstangen verspannt. Zweite Enden der Spannstangen werden an einem Flansch am unteren Ende des unteren Turmsegmentes verspannt.

Gemäß einem weiteren Aspekt der vorliegenden Erfindung ist ein brandsicheres Schott im Bereich des Turmsockels oder in einem der unteren Turmsegmente vorgesehen.

Weitere Ausgestaltungen der Erfindung sind Gegenstand der Unteransprüche.

Vorteile und Ausführungsbeispiele der Erfindung werden nachstehend unter Bezugnahme auf die Zeichnungen näher erläutert.
- Fig. 1: zeigt eine schematische Darstellung einer Windenergieanlage gemäß der Erfindung,
- Fig. 2: zeigt eine schematische Schnittansicht eines Übergangs zwischen einem Fundament und einem Turm einer Windenergieanlage gemäß einem ersten Ausführungsbeispiel,
- Fig. 3: zeigt eine weitere Schnittansicht eines Übergangs zwischen einem Fundament und einem Turm einer Windenergieanlage gemäß dem ersten Ausführungsbeispiel und
- Fig. 4: zeigt eine weitere schematische Schnittansicht eines Übergangs zwischen einem Fundament und einem Turm der Windenergieanlage gemäß dem ersten Ausführungsbeispiel.

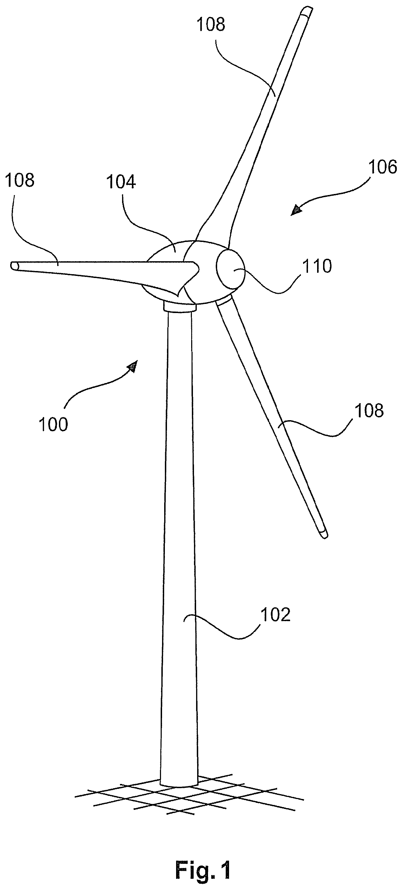

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Der Pitchwinkel der Rotorblätter 108 kann durch Pitchmotoren an den Rotorblattwurzeln der jeweiligen Rotorblätter 108 verändert werden. Der Turm 102 kann aus einer Mehrzahl von aufeinander gesetzten Turmsegmenten 102a z. B. in Form von Betonfertigteilen bestehen und auf einem Fundament 500 platziert sein. Die Segmente werden mittels Spannmitteln (z. B. Spannseile, Spannlitzen) verspannt.

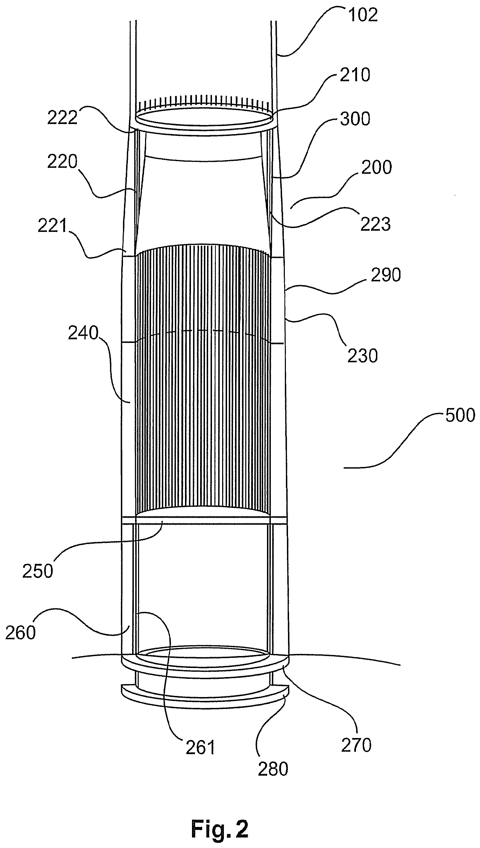

Fig. 2 zeigt eine schematische Schnittansicht eines Übergangs zwischen einem Fundament und einem Turm einer Windenergieanlage gemäß einem ersten Ausführungsbeispiel. In einem Fundament 500 der Windenergieanlage 100 ist ein Turmsockel 200 vorgesehen. Der Turmsockel 200 weist einen Ankerring 280, ein erstes Fundamentsegment 260 mit einem unteren Flanschring 270, ein zweites Fundamentsegment 240, ein drittes Fundamentsegment 230 sowie ein viertes Segment 220 auf. Das vierte Segment 220 weist einen konischen Außendurchmesser auf, d.h. der Außendurchmesser eines ersten Endes 221 des Segmentes 220 ist größer als der Außendurchmesser eines zweiten Endes 222. Am zweiten Ende 222 des Segmentes 220 ist ein Flanschring 210 vorgesehen. Auf diesem Flanschring 210 kann ein unteres Turmsegment 102a platziert werden.

Die Segmente 220, 230, 240 und 260 können als Betonfertigteil-Segmente hergestellt werden. Die Segmente können optional mehrteilig ausgestaltet sein.

Gemäß einem Beispiel, das nicht beansprucht wird, kann eine Mehrzahl von Spannstangen 300 zwischen dem Ring 280 und dem Flansch 210 vorgesehen sein, so dass eine Verspannung zwischen unteren Ring 280 und dem Flansch 210 auf dem Segment 220 erfolgen kann. Mit anderen Worten, die Segmente 260, 240, 230 und 220 sowie das untere Turmsegment 102a werden über eine Mehrzahl von Spannstangen 300 miteinander verspannt. Optional können auch Spannlitzen oder Spannseile verwendet werden.

Optional kann ein brandsicheres Schott 250 zwischen dem ersten und zweiten Segment 260, 240 vorgesehen sein. Das brandsichere Schott 250 kann aus Beton hergestellt sein und kann optional mehrteilig ausgestaltet sein. Das Schott 250 kann an einem der Turmsegmente oder einem der Segmente des Turmsockels befestigt sein. Dies kann mittels einer Halterung erfolgen, die an einem der Segmente befestigt ist. Alternativ bzw. zusätzlich dazu kann das Schott 250 auf einem Ständer aufliegen. Alternativ bzw. zusätzlich dazu kann an einem der Segmente des Turms oder des Turmsockels ein Vorsprung vorgesehen sein, welcher als Auf- oder Ablagefläche des Schottes dient. Der Vorsprung kann sich optional um den gesamten (oder zumindest teilweisen) Umfang des Segmentes des Turmsockels oder des Turmsegmentes erstrecken.

Das Schott 250 ist brandsicher ausgestaltet, d. h. es kann Temperaturen von beispielsweise bis zu 800°C (oder bis zu 1000°C) für mehr als 10 Minuten widerstehen.

In dem Bereich, der durch das Schott 250 verschlossen bzw. abgedeckt wird, kann ein Transformator oder ein Leistungsschrank vorgesehen sein. Der Leistungsschrank kann hierbei eine Mehrzahl von Schaltelementen beispielsweise für einen Wechselrichter oder für einen Umrichter aufweisen.

Optional kann das Schott 250 an einem der Segmente des Turmsockels oder an einem der Turmsegmente befestigt sein.

Optional können die Spannstangen 300 im Bereich des zweiten und dritten Segments 240, 230 im Inneren der Segmente, d.h. im inneren der Fundamentsegmente vorgesehen sein.

Optional kann das erste Segment 260 eine Mehrzahl von Durchgangsbohrungen oder Hüllrohre 261 aufweisen, in welchen die Spannstangen 300 verlaufen.

Das Segment 220 weist ebenfalls eine Mehrzahl von Hüllrohren bzw. Durchgangslöcher 223 auf. Diese Hüllrohre bzw. Durchgangslöcher 223 erstrecken sich optional parallel zu einer Längsachse der ersten, zweiten und dritten Segmente 260, 240, 230. Dies hat zur Folge, dass der Abstand zwischen den Hüllrohren und der Innen- und Außenseite des Segmentes 220 sich entlang der Längsachse des Segmentes 220 ändert.

Durch die konische Ausgestaltung des Segmentes 220 ist der Außendurchmesser des unteren Endes 221 des Abschnittes 220 größer als der Außendurchmesser des oberen Endes 222, an welchem die unteren Turmsegmente 102 befestigt werden. Damit kann die Auflagefläche des Übergangs zwischen Turm und Fundament vergrößert werden, ohne dass dabei die Auflagefläche bzw. der Außendurchmesser des unteren Turmsegmentes 102 verändert werden muss.

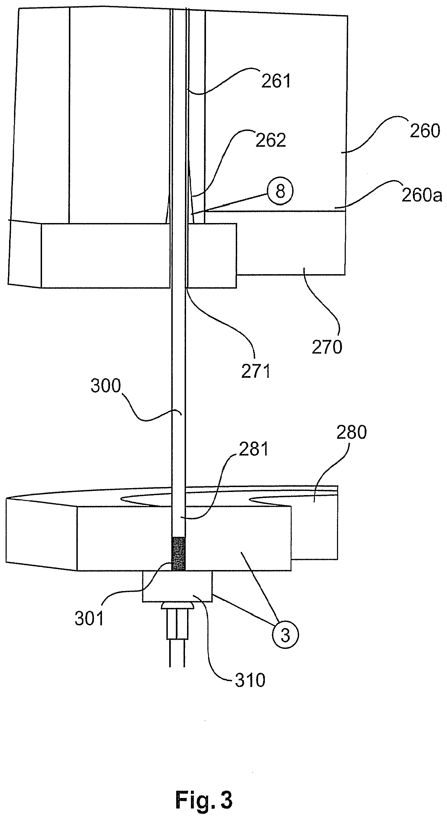

Fig. 3 zeigt eine weitere Schnittansicht eines Übergangs zwischen einem Fundament und einem Turm einer Windenergieanlage gemäß dem ersten Ausführungsbeispiel. In Fig. 3 ist der Metall- oder Betonring 280, der Metall- oder Betonring 270 sowie das erste Fundamentsegment 260 gezeigt. Die beiden Ringe 280, 270 weisen eine Mehrzahl von Öffnungen bzw. Durchgangsbohrungen 271, 281 auf, welche dazu dienen, die Mehrzahl der Spannstangen 300 aufzunehmen. Unterhalb des Ringes 280 kann eine Mehrzahl von Schrauben 310 verspannt werden.

In dem ersten Segment 260 ist eine Mehrzahl von Durchgangslöchern, Durchgangsbohrungen oder Hüllrohren 261 zur Aufnahme der Spannstangen 300 vorgesehen. Am unteren Ende 260a kann das erste Segment 260 eine Mehrzahl von konischen Bohrungen 262 oder eine konische umlaufende Nut im Anschluss an die Durchgangsbohrungen oder Durchgangslöcher 261 aufweisen. Die konischen Bohrungen 262 sind vorsehen, um Spannstangen 300 besser einfädeln zu können.

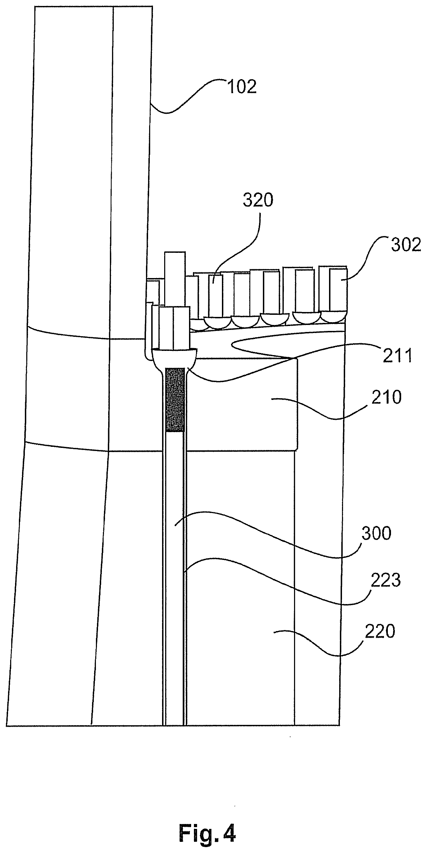

Fig. 4 zeigt eine weitere schematische Schnittansicht eines Übergangs zwischen einem Fundament und einem Turm der Windenergieanlage gemäß dem ersten Ausführungsbeispiel. In Fig. 4 ist das Segment 220, der Flansch 210 sowie das untere Turmsegment 102 gezeigt. Der Flansch 210 kann beispielsweise mit dem unteren Turmsegment 108 verschweißt sein. In dem Segment 220 ist eine Mehrzahl von Durchgangslöchern oder Durchgangsbohrungen oder Hüllrohren 223 vorgesehen. Diese Durchgangslöcher bzw. Hüllrohre 223 dienen dazu, die Spannstangen 300 aufzunehmen. Der Flansch 210 kann im Bereich der Durchgangslöcher 223 an seinem oberen Ende eine Mehrzahl von konischen Bohrungen 211 aufweisen. Die konischen Bohrungen 211 dienen dazu, die Spannschrauben 320 zumindest teilweise aufzunehmen.

Ein Stabring beispielsweise in Form eines Betonringes 270 kann in das Fundament einbetoniert werden. Der Ring kann ebenfalls aus Stahl hergestellt werden. Auf dem Ring 270 kann das erste Betonsegment 260 des Sockels 200 platziert werden. Auf dem ersten Betonsegment 260 kann ein brandsicheres Schott 250 vorgesehen werden. In dem ersten Betonsegment 260 kann eine Mehrzahl von Durchgangslöchern in Längsrichtung vorgesehen werden, durch welche Spannstangen 300 durchgesteckt werden können. Durch die Verwendung von Spannstangen statt Spannlitzen kann die Anzahl reduziert werden. Optional kann ein Nivellierring vorgesehen sein. Oberhalb des ersten Betonsegments 260 kann ein zweites Segment 240 aus Beton oder Stahl vorgesehen sein. Dieses zweite Segment 240 kann optional ebenfalls Durchgangsbohrungen in Längsrichtung zur Aufnahme der Spannstangen aufweisen. Alternativ dazu können Spannstangen auch im Inneren des zweiten Segments 240 verlaufen. Auf dem zweiten Segment 240 kann ein drittes Segment 230 platziert werden, welches aus Stahl oder Beton hergestellt werden kann. Dieses dritte Segment 230 kann ebenfalls in Längsrichtung Durchgangslöcher oder -bohrungen 231 zur Aufnahme der Spannstangen 300 aufweisen. Auf diesem dritten Segment 230 kann ein konisches Segment 220 aus Beton vorgesehen sein. Hierbei ist der Außendurchmesser des ersten unteren Endes 221 größer als der Außendurchmesser des zweiten oberen Endes 222. Der Innendurchmesser des ersten Endes 221 ist größer als der Innendurchmesser des zweiten Endes 222. Auf dem zweiten Ende 222 des Betonsegments 220 kann ein Stahlring oder Flansch 210 platziert werden. Das Betonsegment 220 weist eine Mehrzahl von Durchgangslöchern 223 in Längsrichtung des Segments 220 auf. Aufgrund der konischen Ausgestaltung des Betonsegments 220 ist der Abstand zwischen den Durchgangslöchern 223 zur Aufnahme der Spannstangen an dem ersten Ende nach außen größer als an dem zweiten Ende. Dies wird derart vorgesehen, um gerade Spannstangen 300 verwenden zu können.

Die Spannstangen 300 können auch als Spannstäbe 300 ausgestaltet sein. Zwischen den jeweiligen Segmenten 260, 240, 220 können optional Dichtungen 290 vorgesehen sein.

Gemäß der Erfindung werden Spannstangen oder Spannstäbe 300 verwendet, um die Fertigteilbetonsegmente des Turms, die Stahlsegmente und das Fundament bzw. die Segmente des Sockels 200 miteinander zu verspannen. Gemäß der Erfindung wird eine Mehrzahl von Spannstangen oder Spannstäben 300 vorgesehen. Ein unterstes Betonsegment 260 kann optional über einen Betonring 280, der in dem Fundament einbetoniert ist, angebunden werden. Die jeweiligen Segmente 260, 240, 220 können an ihren ersten Enden (unteres Ende) jeweils über Konuslöcher oder konusförmige Löcher verfügen, welche ein Einfädeln des Fundamentkorbes bzw. der Segmente des Sockels über die Spannstangen erleichtert.

Mit der erfindungsgemäßen Lösung kann auf viele Stahlflanschverbindungen verzichtet werden. Ferner kann eine schnelle Montage und ein Einsatz von preisgünstigeren Betonsegmenten realisiert werden. Entsprechend der Belastung kann der Materialeinsatz reduziert werden. Fertigungstoleranzen können mittels dem Betonring 270 und/oder den Dichtungen 290 ausgeglichen werden.

Gemäß einem weiteren Ausführungsbeispiel der Erfindung kann das konische Segment 220 so ausgestaltet sein, dass der Abstand zwischen den Durchgangslöchern und der Außenseite konstant ist. In diesem Fall müssen die Spannstäbe in diesem Bereich konisch angeordnet bzw. ausgestaltet sein.

Durch die erfindungsgemäße Ausgestaltung des Übergangs zwischen Fundament und Turm und durch die Verwendung der Spannstäbe oder Spannstangen kann auf einen Abspannkeller verzichtet werden. Ferner kann der Durchmesser der Flansche im Übergangsbereich zwischen Fundament und Turm vergrößert werden.

Die vorliegende Erfindung betrifft einen Anschluss einer Stahlrohrsektion an Betonteile und ein Betonfundament. Hierbei ist die Einleitung der Kräfte vom Turm ins Fundament zu beachten.

Gemäß der Erfindung kann eine Hybridlösung für den Anschluss der Stahlrohrsektion an Betonteile und das Betonfundament vorgesehen sein. Durch die Ausgestaltung des konischen Betonsegments 220 kann der Durchmesser der Segmente 240 und 260 sowie der Stahl- oder Betonringe 270, 280 größer gewählt werden als der Durchmesser des unteren Turmsegments 102.

Gemäß der Erfindung kann ein Turmsockel mit einem eingegossenen Ankerbereich vorgesehen sein. Gemäß der Erfindung wird ein unterer Ankerring 280 vorgesehen. Dieser Ankerring 280 kann aus einem ultrahochfesten Material hergestellt werden. Ein Ende der Spannstäbe 300 kann beispielsweise durch Segmentanker oder entsprechender Muttern an dem Ankerring 280 befestigt werden.

Gemäß der Erfindung können die Segmente 230, 240 und 260 aus einem Beton mit einer geringeren Betongüte hergestellt werden, da die Fläche aufgrund des größeren Durchmessers größer ist.

Der Stahlflansch 210 kann beispielsweise als ein L-Flansch ausgestaltet sein und kann eine umlaufende konische Nut 211 aufweisen. Von dieser konischen Nut 211 aus erstrecken sich die Bohrungen in dem Flansch 210, durch welche die Spannstangen 300 hindurch geschoben werden müssen. Zum weiteren Schutz der Spannstangen in den Durchgangslöchern in den Segmenten 260, 240, 230, 220 können die Durchgangslöchern mit Fett verpresst werden.

Gemäß der Erfindung weisen die Segmente 220, 230, 240, 260 jeweils eine Mehrzahl von Hüllrohren 223, 231, 241, 261 jeweils zur Aufnahme von Spannstangen 300 auf. Die unteren Enden der Spannstangen werden an dem Ring 280 befestigt. Die oberen Enden der Spannstangen werden an dem Flansch 210 mittels entsprechender Verschraubung verspannt.

Gemäß der Erfindung ist ein Turmsockel mit einem eingegossenen Ankerbereich vorgesehen. Damit kann ein Fundamentkeller vermieden werden. Gemäß der vorliegenden Erfindung ist ein Turmsockel bestehend aus einer Mehrzahl von Segmenten 260, 240, 230, 220 als Teil des Fundaments vorgesehen und montiert, bevor ein unteres Turmsegment darauf platziert wird. Hierbei werden einige der Segmente des Turmsockels bereits in Beton vergossen, bevor das erste Turmsegment platziert wird. Das oberste Segment 220 des Turmsockels 200 ist insbesondere konisch ausgestaltet.

Gemäß der Erfindung kann ein unteres Turmsegment 102 über einen L-Flansch 210 mit dem Turmsockel 200 bestehend aus den Segmenten verspannt werden.

Optional können anstatt der Stangen auch Spannlitzen oder Spannseile verwendet werden.

## Patentansprüche

1. Windenergieanlage, mit
einem Fundament (500) und einem auf dem Fundament (500) platzierten Turm (102) mit einer Mehrzahl von Turmsegmenten (102a), wobei das Fundament (500) einen Turmsockel (200) mit einer Längsrichtung aufweist, welcher zumindest teilweise in dem Fundament (500) vergossen ist,
wobei der Turmsockel (200) aus mindestens zwei vorgefertigten Betonfertigteilsegmenten (260, 240, 230, 220) besteht und dass ein unteres Turmsegment (102a) zusammen mit den Fertigbetonsegmenten (260, 240, 230, 220) des Turmsockels (200) über Spannstangen, Spannlitzen oder Spannseile (300) verspannt ist,
wobei die mindestens zwei vorgefertigten Betonfertigteilsegmente (260, 240, 230, 220) jeweils eine Mehrzahl von Durchgangsbohrungen (261) zur Aufnahme der Spannstangen, Spannlitzen oder Spannseile (300) aufweisen,
**gekennzeichnet durch** einen Ankerring (280), der ebenfalls als Teil des Turmsockels (200) in dem Fundament (500) einbetoniert ist und erste Enden (301) der Spannstangen, Spannlitzen oder Spannseile (300) verspannt,
wobei zweite Enden (302) der Spannstangen (300) an einem Flansch (210) am unteren Ende des unteren Turmsegments (102a) verspannt sind.

2. Windenergieanlage nach Anspruch 1, wobei
ein oberes Fertigbetonsegment (220) des Turmsockels (200) ein konisches Segment (220) mit einer Mehrzahl von Durchgangsbohrungen, Durchgangslöchern oder Hüllrohren (223) zur Aufnahme der Spannstangen, Spannlitzen oder Spannseile (300) darstellt,
wobei sich die Durchgangsöffnungen, Durchgangslöcher oder Hüllrohre (223) parallel zu einer Längsrichtung des Turmsockels (200) erstrecken.

3. Windenergieanlage nach Anspruch 1 oder 2,
wobei der Außendurchmesser des unteren Turmsegments (102) kleiner als der Außendurchmesser des unteren Endes des Turmsockels (200) ist.

4. Windenergieanlage nach einem der Ansprüche 1 bis 3, ferner mit
einem brandsicheren Schott (250), welches auf einem Vorsprung an einem der Segmente des Turmsockels (200) oder an einem Vorsprung der Turmsegmente (102a) aufliegt.

## Claims

1. Wind turbine with
a foundation (500) and a tower (102), with multiple tower segments (102a), placed on the foundation (500), wherein the foundation (500) has a tower base (200) which extends longitudinally and which is at least partially cast in the foundation (500),
wherein the tower base (200) consists of at least two precast concrete segments (260, 240, 230, 220) and in that a lower tower segment (102a) is tensioned together with the precast concrete segments (260, 240, 230, 220) of the tower base (200) via tensioning rods, tensioning strands or tensioning cables (300),
wherein the at least two precast concrete segments (260, 240, 230, 220) each comprise multiple through bores (261) for receiving the tensioning rods, tensioning sheaths or tensioning cables (300),
**characterized by**
an anchor ring (280) which is also embedded in the concrete of the foundation (500) as part of the tower base (200) and tensions first ends (301) of the tensioning rods, tensioning strands or tensioning cables (300),
wherein second ends (302) of the tensioning rods (300) are tensioned to the lower end of the lower tower segment (102a).

2. Wind turbine according to Claim 1, wherein
an upper precast concrete segment (220) of the tower base (200) represents a conical segment (220) with multiple through bores, through holes or sheaths (223) for receiving the tensioning rods, tensioning sheaths or tensioning cables (300),
wherein the through openings, through holes or sheaths (223) extend parallel to a longitudinal direction of the tower base (200).

3. Wind turbine according to one of Claims 1 to 2, wherein
the external diameter of the lower tower segment (102) is smaller than the external diameter of the lower end of the tower base (200).

4. Wind turbine according to one of Claims 1 to 3, which moreover has
a fireproof seal (250) which bears against a projection on one of the segments of the tower base (200) or against a projection of the tower segment (102a).

## Revendications

1. Eolienne avec
une fondation (500) et une tour (102) placée sur la fondation (500) avec une multitude de segments de tour (102a), dans laquelle la fondation (500) présente un socle de tour (200) avec un sens longitudinal, lequel est coulé au moins en partie dans la fondation (500),
dans laquelle le socle de tour (200) est constitué d'au moins deux segments (260, 240, 230, 220) en pièce préfabriquée en béton préfabriqués et qu'un segment de tour inférieur (102a) est assemblé par serrage conjointement aux segments (260, 240, 230, 220) en béton préfabriqués du socle de tour (200) par l'intermédiaire de tiges de serrage, de torons de serrage ou de câbles de serrage (300),
dans laquelle les au moins deux segments (260, 240, 230, 220) en pièce préfabriquée en béton préfabriqués présentent respectivement une multitude d'alésages de passage (261) pour recevoir les tiges de serrage, les torons de serrage ou les câbles de serrage (300),
**caractérisée par** une bague d'ancrage (280), qui est coulée dans le béton dans la fondation (500) également en tant que partie du socle de tour (200) et qui assemble par serrage des premières extrémités (301) des tiges de serrage, des torons de serrage ou des câbles de serrage (300),
dans laquelle des secondes extrémités (302) des tiges de serrage (300) sont assemblées par serrage sur une bride (210) sur l'extrémité inférieure du segment de tour inférieur (102a).

2. Eolienne selon la revendication 1, dans laquelle
un segment supérieur (220) en béton préfabriqué du socle de tour (200) constitue un segment conique (220) avec une multitude d'alésages de passage, de trous de passage ou de tubes de gainage (223) pour recevoir les tiges de serrage, les torons de serrage ou les câbles de serrage (300),
dans laquelle les ouvertures de passage, les trous de passage ou les tubes de gainage (223) s'étendent de manière parallèle par rapport à un sens longitudinal du socle de tour (200).

3. Eolienne selon la revendication 1 ou 2,
dans laquelle le diamètre extérieur du segment de tour inférieur (102) est inférieur au diamètre extérieur de l'extrémité inférieure du socle de tour (200).

4. Eolienne selon l'une quelconque des revendications 1 à 3, en outre avec
une cloison de sécurité anti-incendie (250), laquelle repose sur une partie faisant saillie sur un des segments du socle de tour (200) ou sur une partie faisant saillie des segments de tour (102a).
